Europäisches Patentamt

European Patent Office

Office européen des brevets

(11) Numéro de publication : **0 495 735 A1**

## (12) DEMANDE DE BREVET EUROPEEN

(21) Numéro de dépôt : **92420018.1**

(22) Date de dépôt : **14.01.92**

(51) Int. Cl.⁵ : **C04B 38/00,** C04B 35/52,
B01D 71/02, B01D 69/10,
B01D 39/20

(30) Priorité : **18.01.91 FR 9100935**

(43) Date de publication de la demande :
**22.07.92 Bulletin 92/30**

(84) Etats contractants désignés :
**AT BE CH DE FR GB IT LI LU NL SE**

(71) Demandeur : **PECHINEY RECHERCHE**
**(Groupement d'Intérêt Economique régi par**
**l'Ordonnance du 23 Septembre 1967)**
**Immeuble Balzac**
**10, place des Vosges**
**F-92400 Courbevoie, La Défense 5 (FR)**

(72) Inventeur : **Salem, Jean**
**Allée de la Forêt**
**F-27120 Pacy Sur Eure (FR)**
Inventeur : **Bommier, Christophe**
**84, boulevard Pasteur**
**F-75015 Paris (FR)**

(74) Mandataire : **Jacquet, Michel et al**
**PECHINEY 28, rue de Bonnel**
**F-69433 Lyon Cédex 03 (FR)**

(54) **Procédé de fabrication de tubes poreux, de perméabilité élevée, en matériau composite**
**carbone-carbone et leurs applications.**

(57) Le procédé de fabrication de tubes poreux en matériau composite carbone-carbone comporte :
— l'enroulement sur un mandrin (1) d'une nappe non-tissée (2) en précurseur de fibres de carbone et
son gaînage,
— la compression et la stabilisation à chaud de l'ensemble,
— l'imprégnation par une résine de la nappe comprimée
— un traitement thermique de carbonisation de la résine.
On obtient ainsi des tubes à perméabilité élevée, à faible diamètre de pore et à surface intérieure de
faible rugosité.
Application à la fabrication d'éléments de filtration, de supports de membrane filtrante.

FIG.5a

## DOMAINE DE L'INVENTION

L'invention concerne la fabrication de tubes poreux en matériau composite carbone-carbone ainsi que les applications des tubes fabriqués selon l'invention.

## RAPPEL DE L'ART ANTERIEUR

Les tubes poreux sont très utilisés principalement dans les techniques séparatives soit comme éléments filtrants soit comme supports de membrane filtrante. Dans les techniques séparatives, les procédés comme l'osmose inverse, l'ultrafiltration et la microfiltration ont recours, soit à des membranes organiques, soit depuis quelques années à des membranes minérales. Suivant le type d'utilisation, ces membranes doivent posséder des dimensions de pores faibles et appropriés à l'utilisation envisagée, une épaisseur minimale pour permettre une faible perte de charge à la filtration (perméabilité élevée), et requièrent un support ayant des caractéristiques mécaniques élevées, une grande perméabilité et un diamètre de pore adapté à celui de la membrane.

On connaît déjà l'intérêt des matériaux composite carbone-carbone (C-C en abrégé) pour réaliser des supports de membrane de filtration à caractéristiques mécaniques élevées. En outre, ces supports en composite C-C présentent une grande inertie chimique qui se traduit par une absence de contamination du filtrat, et par une absence de corrosion du support, du moins dans les conditions usuelles d'utilisation.

Ainsi, le brevet français No 2 582 956, au nom de la demanderesse, décrit un support de membrane minérale, constitué d'un matériau composite C-C de faible épaisseur dans lequel le substrat fibreux est constitué de textile en carbone (fibres et/ou tissu et/ou feutre), éventuellement associé à un mat de fibres disposées aléatoirement. Un tel support en matériau composite présente, bien que de faible épaisseur, des caractéristiques mécaniques suffisantes, en particulier une résistance à l'éclatement, à l'écrasement et à la flexion dans le cas de tubes. Selon ce brevet, des tubes en composite carbone-carbone peuvent être obtenus par enroulement de tissus, imprégnation par une résine, polymérisation et carbonisation de la résine, ou encore par "pultrusion".

## POSITION DU PROBLEME

Les matériaux composite C-C poreux décrits dans le FR 2 582 956 et utilisés comme supports de membrane présentent déjà des performances élevées, mais la demanderesse a observé qu'ils n'étaient pas adaptés comme supports de membranes minces à cause de l'irrégularité de leur surface : en effet, plus la membrane est mince et est de petit diamètre de pore, plus la surface du support en contact avec la membrane doit être régulière et sans rugosité, sinon il est difficile, voire impossible de déposer une membrane d'épaisseur régulière. Les irrégularités de surface entraînent une fragilisation de la membrane. Par exemple, il peut y avoir "poinçonnement" de la membrane dans les gros défauts de surface du support. En outre, les irrégularités de surface du support peuvent se transmettre, du moins en partie, à la surface de la membrane elle-même. Or, la surface de la membrane doit présenter le moins d'aspérités possible et être la moins rugueuse possible afin de pouvoir être nettoyée et décolmatée facilement.

La demanderesse a donc poursuivi ses recherches pour résoudre ce problème.

Elle a aussi cherché à améliorer la performance des tubes poreux et plus précisément à mettre au point des tubes poreux en matériau composite C-C présentant simultanément une surface lisse, une perméabilité élevée et un faible diamètre de pore, tubes qui peuvent être utilisés soit comme supports de membrane soit comme membranes filtrantes.

Le procédé selon l'invention a donc pour objet la fabrication de tubes poreux de grande longueur par rapport au plus grand diamètre, en matériau composite C-C, de perméabilité et de caractéristiques mécaniques élevées tout en présentant une surface filtrante de faible rugosité et de faible diamètre de pore.

## DESCRIPTION DE LA SOLUTION

Le procédé de fabrication d'un tube poreux en matériau composite carbone-carbone comporte, selon l'invention, l'enroulement d'une nappe carbonée de manière à former un substrat fibreux ayant la forme d'un tube et la densification de ce substrat par formation d'une matrice carbonée poreuse, et est caractérisé en ce que :

a) on enroule sur un mandrin (1) à surface lisse de faible rugosité une nappe non-tissée (2) de précurseur de fibres de carbone, de densité apparente comprise entre 0,005 et 0,05, et on introduit la nappe (2), enroulée sur son mandrin (1), dans une gaîne (3) souple, solide mécaniquement de manière à maintenir serré ledit enroulement,

b) on comprime la nappe enroulée à l'aide de moyens de compression permettant d'avoir une réduction homothétique de l'épaisseur de l'enroulement par rapport à l'axe central (8) du tube, de manière à obtenir un substrat fibreux, uniformément comprimé sur le mandrin (1), de densité apparente comprise entre 0,2 et 0,6, et on le soumet pendant ou après la compression à un traitement thermique pour figer et stabiliser le substrat fibreux sous sa forme de profilé (5), que l'on peut ensuite éventuellement carboniser.

c) après avoir, si nécessaire, retiré la gaîne (3), on imprègne le profilé de substrat fibreux (5) d'une résine et on polymérise ladite résine de manière à obtenir un profilé rigide (6) à matrice de résine polymérisée.

d) on porte ledit profilé rigide (6) à une température comprise entre 700 et 1300°C pour le carboniser, le mandrin (1) ayant été retiré soit avant la carbonisation si nécessaire, soit de préférence après la carbonisation,

de manière à obtenir un tube à perméabilité élevée, à faible diamètre de pore et à surface intérieure de faible rugosité, de densité apparente comprise entre 0,5 et 1,2.

Les études entreprises par la demanderesse ont montré l'intérêt d'utiliser des nappes non-tissées de précurseur de fibres de carbone et, de préférence une nappe non-tissée sous forme de mat de précurseur à l'état préoxydé. En effet, d'une part, un mat permet d'obtenir simultanément les caractéristiques recherchées (faible rugosité de surface, perméabilité élevé et faible diamètre de pore), ce que ne permettent pas les nappes tissées, sans doute à cause de la structure ordonnée et anisotrope de l'un (nappe tissée) comparée à la structure désordonnée et relativement isotrope de l'autre (nappe de mat).

D'autre part, il a été observé l'intérêt de mettre en forme le substrat fibreux de carbone sous forme de précurseur à l'état préoxydé. Peut-être est-ce dû au fait qu'à l'état préoxydé, le précurseur de fibre de carbone est encore thermoplastique.

De manière plus précise, la demanderesse a observé qu'un matériau composite C-C obtenu selon l'invention à partir d'un substrat non-tissé tel un mat de précurseur de fibres de carbone à l'état préoxydé permettait :

– d'une part, de conserver des caractéristiques mécaniques élevées, sensiblement comparables à celles obtenues avec un substrat comportant un tissu de fibres de carbone.

– d'autre part, d'améliorer la régularité de la surface du matériau composite C-C, comparativement à un matériau dont le substrat fibreux est un tissu.

– enfin et surtout, d'accroître dans de grandes proportions la perméabilité du matériau composite poreux, à diamètre de pore acceptable. On atteint jusqu'à 25 fois au moins la perméabilité obtenue selon l'art antérieur, à diamètre de pore acceptable, ce qui est considérable et du plus grand intérêt d'un point de vue pratique.

La nappe de précurseur de fibres de carbone selon l'invention est de préférence un mat de précurseur de fibres de carbone à l'état préoxydé (fibre PAN après un traitement thermique généralement vers 200°C).

Un mat est une nappe non-tissée constituée d'une dispersion aléatoire de fibres de longueur relativement faible, orientées en moyenne dans le plan constitué par la couche de mat. Il s'agit d'une orientation aléatoire de segments de fibres qui constitue un enchevêtrement liant les segments entre eux et permettant la manipulation de la nappe ainsi constituée. Ces segments de fibres ou précurseurs de fibres de carbone ont une longueur moyenne comprise entre 1 et 100 mm et de préférence comprise entre 20 et 80 mm.

La masse surfacique des mats de départ est généralement comprise entre 50 et 200 g/m$^2$ et leur densité apparente est voisine de 0,01.

Le mat selon l'invention peut être faiblement aiguilleté.

Selon l'invention, on peut introduire dans le mat avant ou au moment de l'enroulement, une charge dispersée telle qu'une fine poudre inerte en matériau réfractaire ou carboné, en particulier pour permettre d'ajuster le diamètre des pores à l'endroit souhaité, par exemple dans la partie du mat correspondant à la surface intérieure du tube.

Cette charge peut être aussi constituée de fibres broyées en matériau inerte, notamment vis à vis du carbone (fibres de carbone, fibres de verre, fibres de carbure de silicium etc...), capables de modifier le diamètre des pores.

En particulier, il est avantageux de modifier ainsi seulement une partie du mat, celle correspondant à la surface intérieure du tube final de manière à avoir un tube poreux à structure asymétrique, avec typiquement un diamètre de pores 10 fois plus faible pour la partie intérieure modifiée que pour la partie adjacente non modifiée.

En effet, surtout dans le cas où le tube en matériau composite C-C doit servir de support à une membrane très mince et d'une grande finesse de pores, un support à surface intérieure très régulière et à porosité adaptée est particulièrement recherché. Il est important de noter que ces caractéristiques sont obtenues sans réduire significativement la perméabilité du support parce que seule une faible épaisseur du support a été modifiée avec diminution du diamètre de pores.

Par ailleurs, un tube composite poreux dont une face, généralement la face intérieure, a été ainsi modifiée peut éventuellement être utilisé tel quel comme élément filtrant sans adjonction de membrane.

Les charges utilisables pour réduire le diamètre de pore ont une taille particulaire moyenne comprise entre 0,1

et 10 μm et, dans la partie du tube poreux où elles sont présentes, de préférence la partie intérieure, elles occupent une fraction volumique comprise entre 1 et 20% du volume total et de préférence entre 5 et 10 % du volume total.

Par ailleurs, il est avantageux, pour renforcer l'asymétrie du tube poreux et par là augmenter la vitesse de filtration, d'utiliser des couches successives de mat permettant d'obtenir dans le tube final des diamètres de pores allant croîssant dans le sens du flux à filtrer, c'est à dire généralement de l'intérieur vers l'extérieur du tube poreux. Il est avantageux que ces diamètres de pores soient sensiblement dans un rapport de 10 entre une couche et la suivante, ce qui peut être obtenu en jouant sur la densité du mat et/ou le diamètre des fibres.

Le mandrin (1) sur lequel est enroulée la couche de mat est un profilé en matériau suffisamment rigide pour ne pas être déformé par les moyens de compression (4), notamment par le passage dans une filière. Il a une section correspondant sensiblement à la section intérieure du tube poreux en matériau composite C-C obtenu selon l'invention.

Bien qu'une section circulaire soit la plus courante pour un tube, l'invention ne se limite pas à celle-ci. Toute section sans concavité peut convenir puisqu'elle permet l'enroulement d'une nappe tout en gardant un étroit contact entre la nappe et le mandrin servant de support, contact qui est nécessaire pour assurer par filage une compression isotrope du mat.

Le mandrin est constitué d'un matériau stable thermiquement au moins jusqu'à la température de polymérisation de la résine, c'est à dire vers 150-200°C. Selon l'invention, le mandrin peut être une tige ou un tube en carbone, en graphite, en PTFE, en métal ou alliage métallique, en métal ou alliage métallique recouvert de PTFE. Il est commode d'utiliser un tube de cuivre à cause de son bon état de surface, de sa bonne conductibilité thermique, de son point de fusion élevé et de sa dilatation lors du traitement thermique de carbonisation.

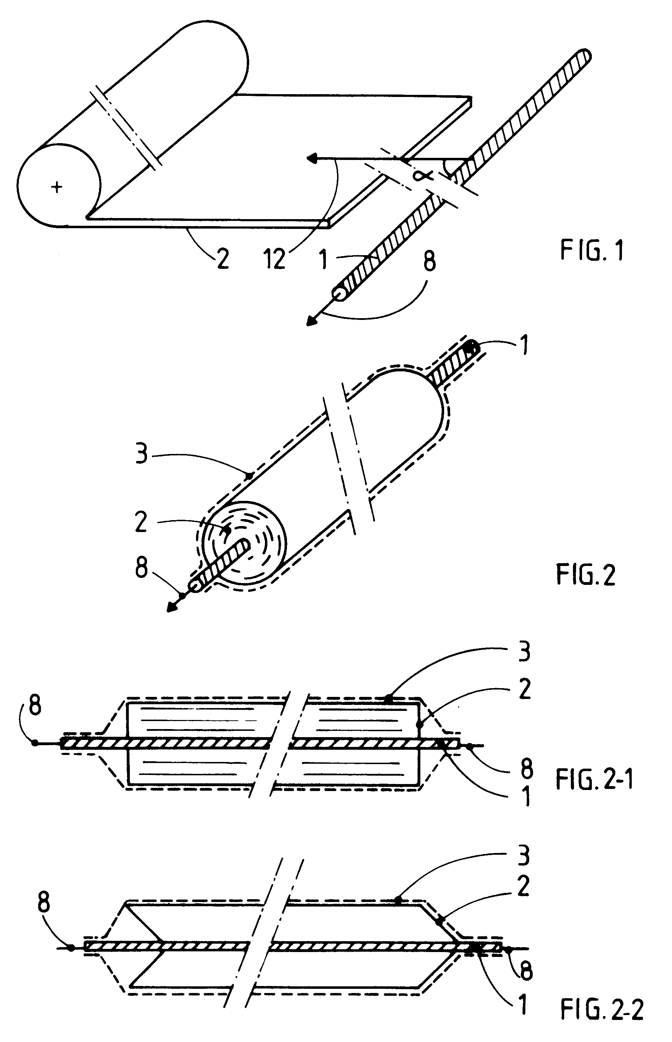

Pour décrire les différentes façons d'enrouler la nappe (2) sur le mandrin (1), on considère la position relative de l'axe (8) du mandrin (1) et de la direction (12) de la nappe (2) (symbolisée par un flèche parallèle aux grands côtés de la nappe - voir figure 1). Cette position relative peut être exprimée par l'angle $\alpha$ que fait la direction (12) de la nappe avec l'axe (8) du tube.

L'enroulement de la nappe non-tissée sur le mandrin peut se faire classiquement en présentant la nappe de manière que la direction de la nappe soit sensiblement perpendiculaire à l'axe (8) du mandrin, la largeur de la nappe étant légèrement inférieure à la longueur du mandrin et pouvant atteindre 1500 mm. Il est avantageux de choisir un angle $\alpha$ très légèrement différent de 90° pour avoir un enroulement à extrémité conique, comme représenté à la figure 2-2.

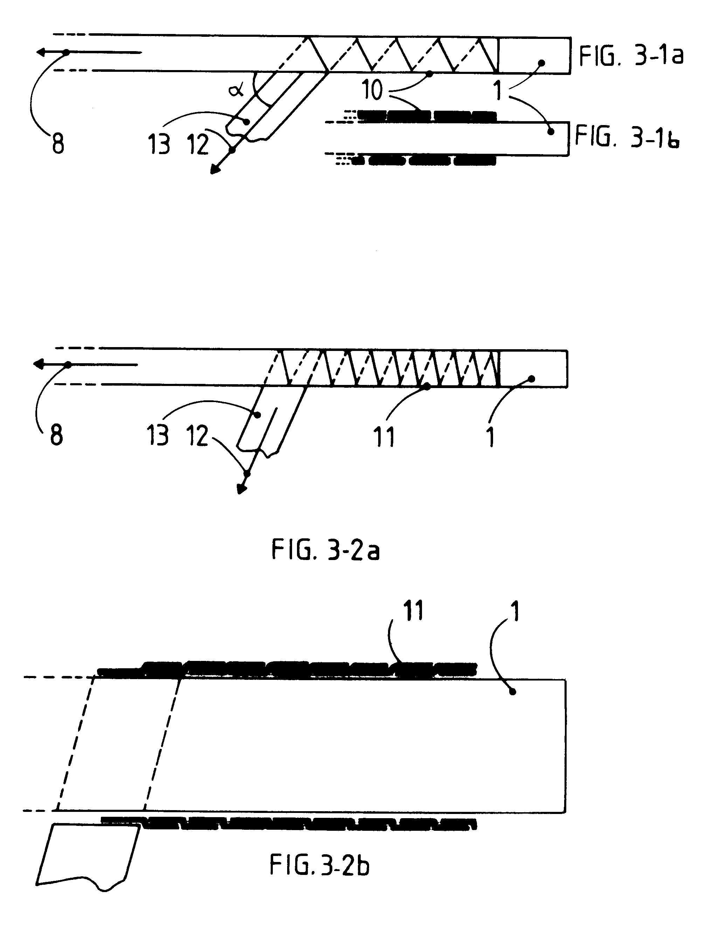

On peut aussi enrouler non pas une nappe de grande largeur mais une ou plusieurs bandelettes (13) de moindre largeur de manière à obtenir soit des spires jointives (10) comme illustré aux figures 3-1a et 3-1b soit des spires avec chevauchement (11) comme illustré aux figures 3-2a et 3-2b.

On peut aussi enrouler plusieurs bandelettes en alternant le sens d'enroulement et donc le signe de l'angle $\alpha$, ceci afin d'améliorer les propriétés mécaniques.

Lorsqu'on souhaite modifier le diamètre de pore de surface par adjonction de fine charge minérale, il est commode de former la première couche de l'enroulement par l'enroulement à spires jointives d'une bandelette contenant une fine charge minérale et de poursuivre l'enroulement en formant les couches suivantes soit avec d'autres bandelettes soit avec une nappe de grande largeur, non chargées.

Le calcul et/ou l'expérience permet de déterminer le nombre de couches ou de spires de mat à obtenir par enroulement, en fonction notamment des caractéristiques du mat de départ, du taux de compression dans la filière, de l'épaisseur du matériau composite final, etc...

Après enroulement de la nappe sur le mandrin, l'ensemble est placé dans une gaîne dont la fonction est d'abord de conserver l'enroulement de la nappe, de faciliter la manipulation de la nappe enroulée et le glissement de celle-ci dans les moyens de compression (4).

Typiquement, la gaîne est soit une tresse tissée en carbone souple, soit une tresse en fibres naturelles ou synthétiques soit encore un film plastique de préférence thermorétractable, pour qu'il n'y ait pas de plis et de surépaisseurs, et stable thermiquement au moins jusqu'à 200 °C.

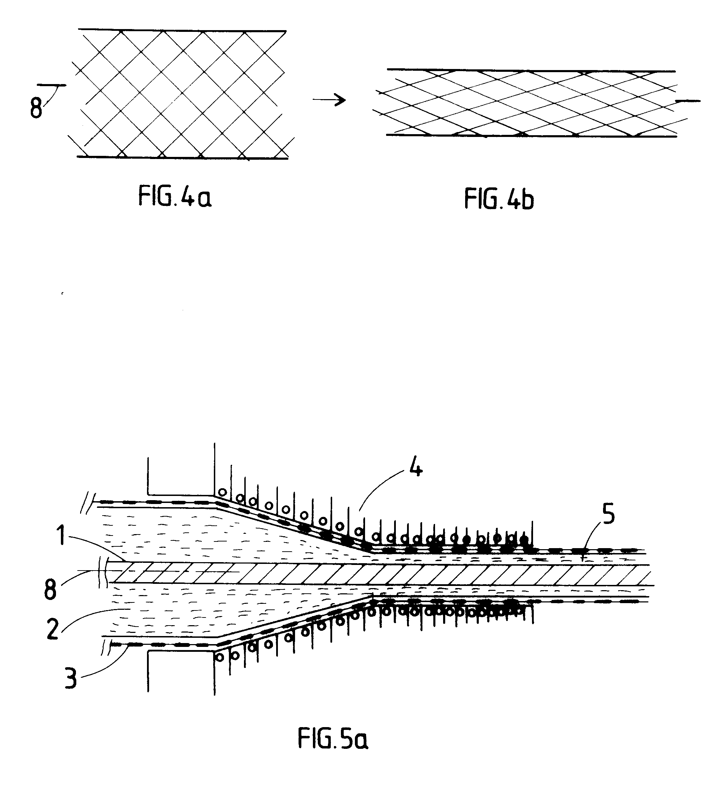

Pour que la gaîne ne forme pas de plis ou de surépaisseur gênante lors de la compression, il est préféré selon l'invention soit de choisir une tresse tissée à section variable selon la traction exercée sur la tresse, comme illustré aux figures 4a et 4b, soit d'utiliser une tresse à claire-voie, du type filet de pêche, c'est à dire possédant des caractéristiques mécaniques élevées, une grande finesse ainsi qu'une surface propre, occupée par le matériau constituant la tresse, relativement faible par rapport à la surface totale de la tresse, en tout cas représentant moins de 30 % de celle-ci, ce qui est facile à obtenir avec des fils fins.

Il est préféré selon l'invention de choisir une tresse à claire-voie ayant des caractéristiques mécaniques élevées, initialement et/ou après le traitement thermique de carbonisation, de manière à pouvoir conserver celle-ci pendant la phase d'imprégnation par la résine et à avoir si possible en outre un renforcement mécanique du tube poreux final grâce à la tresse extérieure, et cela sans diminution significative de la perméabilité.

La compression de l'ensemble "mandrin + nappe enroulée + gaine" est réalisée à l'aide de moyens de compression (4), typiquement une filière, de profil intérieur homothétique de celui du mandrin (1) pour comprimer le mat généralement de 20 à 60 fois et obtenir après filage une nappe comprimée ayant une densité apparente comprise entre 0,2 et 0,6.

Il importe aussi de figer et de stabiliser la structure de la nappe à l'état comprimé grâce à un traitement thermique entre 100 et 400°C.

Les étapes de compression et de stabilisation de la nappe comprimée sont associées selon les modalités suivantes :

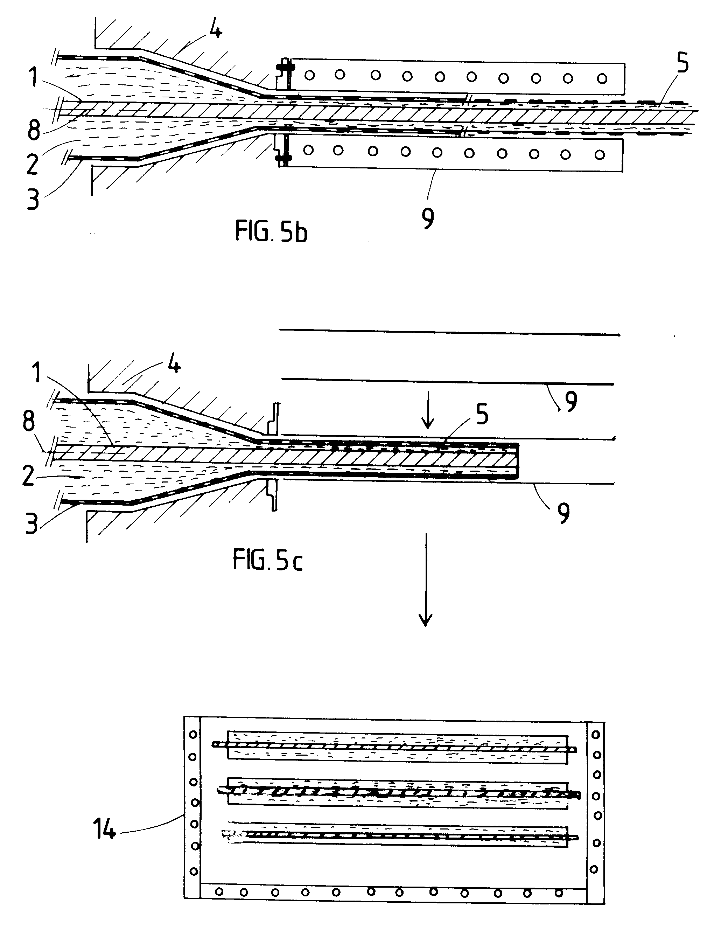

Selon une première modalité, on réalise une compression de la nappe à chaud (voir figure 5a).

Les conditions de compression sont les suivantes :
– compression, typiquement dans une filière chauffée, à une température comprise entre 150 et 400°C
– la vitesse de passage est comprise entre 0,1 et 10 m/min

Il importe que le mat comprimé ait un temps de séjour suffisant dans la filière pour figer la structure du mat dans son état comprimé. Ce temps de séjour est généralement compris entre 10 et 500 s.

On peut avoir une seule filière ou aussi une succession de filières assurant une progressivité de la compression et présentant donc des sections intérieures de plus en plus petites.

Selon une autre modalité de l'invention, il est possible d'effectuer la compression à froid, par exemple à l'aide d'une filière en PTFE, puis de chauffer le profilé de substrat fibreux obtenu en sortie de filière.

Pour cela, on introduit le profilé de substrat fibreux en sortie de filière dans un tube métallique (9) qui peut être soit mécaniquement solidaire de la filière soit désolidarisable de celle-ci.

Dans le premier cas (voir figure 5b), le tube métallique (9) est fixe et muni de moyens de chauffage, ce qui permet d'obtenir en sortie de tube un profilé de substrat fibreux stabilisé en jouant sur la température et le temps de séjour dans le tube.

Dans le second cas, le tube métallique a sensiblement la longueur du tube poreux final et une fois "plein", il est remplacé par un tube "vide", le tube "plein" étant ensuite placé dans une étuve (14) pour stabiliser le substrat fibreux (voir figure 5c).

Après la phase de compression et stabilisation, on obtient un profilé de substrat comprimé à géométrie stabilisée que l'on peut éventuellement carboniser avant imprégnation.

On peut alors enlever la gaine externe (3) si elle risque de nuire à une imprégnation homogène du substrat fibreux (5) par la résine carbonisable et à la perméabilité du support, mais, comme indiqué précédemment la gaîne peut être conservée si elle est à claire-voie.

L'imprégnation du substrat fibreux (5) par une résine carbonisable est réalisée de manière connue, de même que la polymérisation de la résine à une température comprise entre 150 et 250°C généralement.

La résine utilisée pour l'imprégnation appartient au groupe de résines habituellement utilisées pour constituer la matrice carbonée et densifier le substrat fibreux servant de renfort. On peut citer de manière non limitative les résines phénoliques, furaniques, les mélanges brai-furfural catalysés au sulfate d'éthyle, etc...

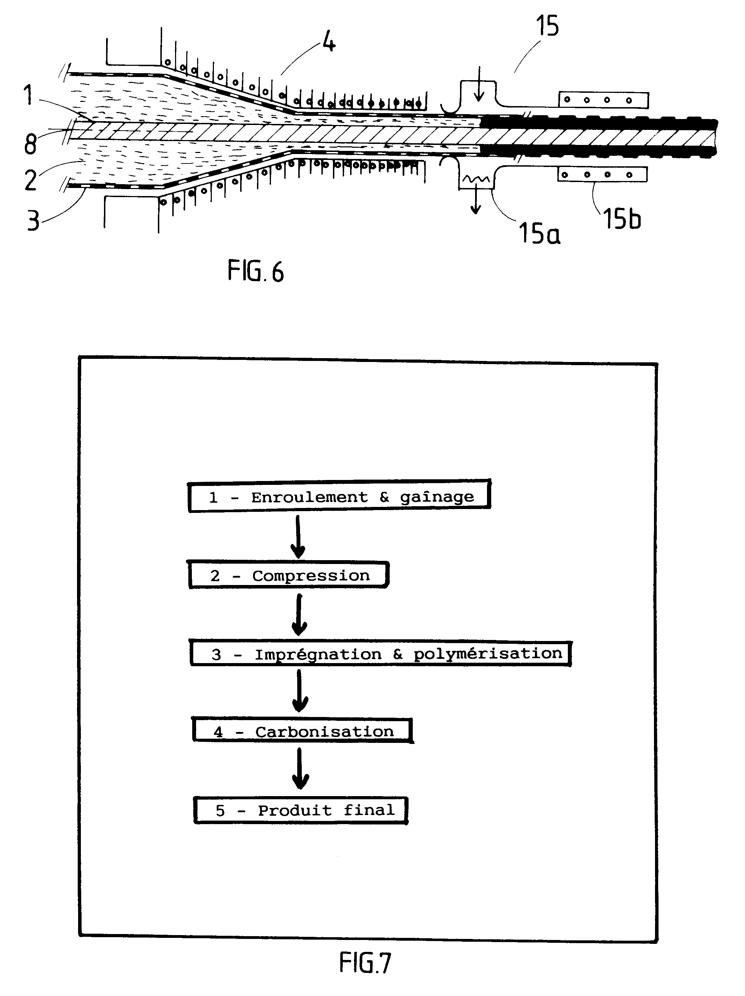

On peut imprégner en continu le substrat fibreux (5) directement après que ce dernier a subi son traitement thermique de stabilisation, comme schématisé à la figure 6, d'autant que, le substrat fibreux (5), sortant à une température allant de 150 à 400°C, va fluidifier la résine et ainsi faciliter sa pénétration dans le substrat fibreux jusqu'au mandrin.

Il est alors commode de compléter le dispositif d'imprégnation (15a) par un dispositif de chauffage (15b) pour polymériser au moins partiellement la résine de manière à permettre une manipulation aisée des profilés de substrat fibreux imprégné.

Le produit obtenu à l'issue de la phase de polymérisation est un profilé en matériau composite rigide non-poreux (6), de sorte qu'il est possible à ce stade d'enlever le mandrin (1). Ceci est nécessaire lorsque le mandrin est en matériau ou contient un matériau ne résistant pas aux hautes températures nécessaires pour carboniser la résine, par exemple en cas d'utilisation d'un mandrin contenant du PTFE.

Par ailleurs, la demanderesse a observé qu'il était avantageux de conserver le mandrin (1) durant le traitement thermique à haute température lorsque celui-ci présente un coefficient de dilatation suffisant pour se dilater contre la surface intérieure du profilé de substrat fibreux à matrice de résine, et par là contribuer à réduire encore la rugosité de la surface intérieure. En outre, dans ce cas et compte tenu des coefficients de dilatation relatifs du mandrin et du tube poreux composite obtenu, le mandrin (1) se sépare aisément du tube poreux composite après retour à la température ambiante. Ceci se produit notamment avec un mandrin en métal ou alliage métallique, de préférence avec un mandrin en cuivre (tige ou tube de cuivre).

Le traitement thermique de carbonisation du profilé en matériau composite rigide non-poreux (6) est connu en lui-même. Typiquement, il a lieu à une température comprise entre 700 et 1300°C. Selon l'invention, on choisit une température de 800-900°C si le mandrin est en cuivre et une température supérieure si le mandrin est en graphite ou s'il est enlevé, pour des raisons de tenue de matériaux à la température.

Selon l'invention, il est possible, comme cela est connu par le brevet français n° 2 582 956 d'adapter la porosité du tube poreux composite par une succession de traitements de densification, qu'il s'agisse de densification par imprégnation de résine plus carbonisation ou qu'il s'agisse de densification par DPCV (dépôt chimique en phase vapeur).

La densité finale du matériau composite constituant le tube poreux obtenu après densification du substrat fibreux est comprise entre 0,5 et 1,2 et préférentiellement entre 0,8 et 1 de manière à avoir simultanément des caractéristiques mécaniques et une perméabilité suffisantes.

Les résultats obtenus selon l'invention sont particulièrement surprenants en ce qui concerne surtout la perméabilité, qui est au moins 25 fois plus grande, à diamètre poreux voisin, pour le support selon l'invention (exemple 1) que pour le support selon l'art antérieur (exemple 2).

Le procédé de l'invention permet d'obtenir des tubes profilés à paroi poreuse présentant simultanément une surface intérieure très lisse, une grande finesse de pores, une grande perméabilité et des caractéristiques mécaniques élevées.

En outre, la paroi poreuse peut avoir une porosité différentielle contrôlée et plus particulièrement présenter un diamètre de pore en surface différent (et en général plus petit) de celui au sein de la paroi, grâce à l'effet de paroi et/ou l'introduction de charge.

Toutes ces caractéristiques constituent un grand progrès par rapport à l'art antérieur.

Les tubes poreux obtenus selon l'invention trouvent une application dans le domaine de la filtration comme supports de membrane ou comme éléments filtrants de fluides, liquides ou gaz chargés de particules solides.

## DESCRIPTION DES FIGURES

La figure 1 schématise en perspective une bobine de mat (2) et le mandrin (1) sur lequel la bande de mat sera enroulée. La bobine de mat est sous forme d'une bande de grande longueur par rapport à sa largeur et sa direction (12) est indiquée par un flèche parallèle aux grands côtés de la bande. La direction (12) de la bande fait avec l'axe (8) du mandrin un angle $\alpha$ sensiblement égal à 90° dans le cas de la figure 1.

La figure 2 schématise en perspective la bande de mat (2) enroulée sur le mandrin (1) et entourée de la gaîne (3).

Les figures 2-1 et 2-2 schématisent une vue de la bande de mat (2) enroulée sur le mandrin (1) et entourée de la gaîne (3) en coupe transversale selon l'axe (8) du mandrin (1), avec un enroulement à angle $\alpha$ égal à 90° pour la figure 2-1 et un angle $\alpha$ très légèrement différent de 90° pour la figure 2-2 permettant d'obtenir un bout conique qui facilite l'introduction de l'ensemble dans le dispositif de compression (4), représenté aux figures 5a, 5b, 5c.

La figure 3-1a représente une vue en perspective d'un enroulement à spires jointives (10) d'une bandelette (13) de mat sur le mandrin (1). La figure 3-1b est une vue partielle en coupe du même enroulement. Dans le cas de spires jointives, il y a, entre la largeur 1 de la bandelette (13), l'angle et le rayon r du mandrin cylindrique, la relation : $1 = 2.\pi. r. \cos \alpha$.

La figure 3-2a représente une vue en perspective d'un enroulement à spires chevauchantes (11) d'une bandelette (13) de mat sur le mandrin (1). La figure 3-2b est une vue partielle en coupe du même enroulement.

Les figures 4a et 4b schématisent en coupe transversale selon l'axe (8) du mandrin (1) une tresse tissée à section variable dans deux états : en 4a, avant traction sur la tresse, la tresse présente une section importante alors qu'en 4b, la tresse, suite à une traction, s'est allongée et sa section s'est réduite.

La figure 5a schématise en coupe transversale selon l'axe (8) du mandrin (1) la compression de l'ensemble "mandrin (1) + nappe enroulée (2) + gaîne (3)" à l'aide d'une filière (4) chauffée.

La figure 5b schématise en coupe transversale selon l'axe (8) du mandrin (1) la compression de l'ensemble "mandrin (1) + nappe enroulée (2) + gaîne (3)" à l'aide d'une filière non chauffée (4) prolongée par un tube métallique chauffé (9) fixe solidaire de la filière non chauffée.

La figure 5c schématise en coupe transversale selon l'axe (8) du mandrin (1) la compression de l'ensemble "mandrin (1) + nappe enroulée (2) + gaîne (3)" à l'aide d'une filière non chauffée (4) prolongée par un tube métallique mobile (9) qui, une fois rempli, est remplacé par un tube vide et est lui-même transféré dans une étuve (14) pour subir le traitement thermique de stabilisation.

La figure 6 schématise en coupe transversale selon l'axe (8) du mandrin (1) un ensemble constitué d'une filière chauffante (4) constituant un moyen de compression et un dispositif (15) comportant une partie (15a) formant cavité dans laquelle s'effectue l'imprégnation par la résine qui circule et s'écoule de haut en bas dans la cavité, et comportant une partie en forme de tube (15b) permettant l'essorage de la résine en excès puis la polymérisation au moins partielle de la résine afin d'obtenir des profilés manipulables.

La figure 7 est un synoptique du procédé selon l'invention :

1) Enroulement & gainage :

Enroulement de nappe non-tissée (2) sur un mandrin rigide (1) - avec en option introduction d'une charge dispersée

Gaînage par une tresse

2) Compression :

Compression de la nappe enroulée et traitement thermique de stabilisation

– avec en option carbonisation de la nappe comprimée et stabilisée

3) Imprégnation & polymérisation :

Imprégnation de résine et polymérisation de la résine

4) Carbonisation :

Traitement thermique de carbonisation

5) Produit final :

Après séparation du mandrin (1), le produit final est un tube poreux,

– solide mécaniquement

– à surface intérieure lisse

– à perméabilité élevée

– à diamètre de pore adapté à son utilisation

EXEMPLES

L'exemple 1 illustre l'invention et l'exemple 2 l'art antérieur.

Exemple 1

On est parti de mat de précurseur de fibre de carbone (fibre PAN à l'état préoxydé) en nappe de 1 à 3 mm d'épaisseur et de 1,4m de large.

Caractéristiques :

masse surfacique : 100 g/m$^2$

longueur (moyenne) des fibres : 63 mm

densité apparente : 0,01.

On a enroulé sous légère tension la nappe sur un mandrin en PTFE de 7 mm de diamètre et de 1,60 m de long jusqu'à ce qu'on ait obtenu un enroulement de mat de 20 mm de diamètre environ. On a introduit l'enroulement de mat dans une tresse de carbone.

En tirant sur la tresse de carbone, on a comprimé l'enroulement par filage à l'aide d'un dispositif analogue à celui décrit à la figure 5b, avec une température de filage de 250°C et une vitesse de passage de 0,2 m/min, ce qui correspond à un temps de séjour dans la filière de 3 min. L'ensemble filière utilisé a une longueur de 1,80 m avec une première partie de compression constituée d'une filière froide de 200 mm de longueur, avec un diamètre d'entrée de 25 mm et un diamètre de sortie de 10 mm et une seconde partie constituée d'un tube chauffé de 1,60 m de long et de 10 mm de diamètre intérieur.

On a obtenu un profilé de substrat fibreux de densité apparente égale à 0,5 environ. Puis on l'a imprégné au trempé de résine phénolique après avoir enlevé la tresse de carbone. On a polymérisé la résine à 160°C pendant 2 heures puis, après avoir retiré le mandrin, on a porté le profilé imprégné de résine polymérisée à 900°C et maintenu 6 heures à cette température pour carboniser l'ensemble.

Après refroidissement, on a obtenu un tube poreux ayant les propriétés suivantes :

microrugosité mesurée par examen d'une coupe :

$$R_T : 24,2 - 32,2 \ \mu m$$
$$R_A : 3,4 - 3,7 \ \mu m$$

perméabilité   : 775 cm$^3$/cm$^2$.s.bar

diamètre poreux moyen  : 17,1 $\mu m$

Exemple 2

On a imprégné un tissu de fibres de carbone à 18g/m linéaire avec une résine phénolique et on l'a enroulé sur un mandrin en acier de 6 mm de diamètre de manière à obtenir un rouleau de 9 mm de diamètre environ. On a polymérisé la résine et, après avoir enlevé le mandrin, on a carbonisé le tube à une température supérieure à 1000°C. On obtient un tube poreux selon l'art antérieur ayant les propriétés suivantes :

– microrugosité :

$$R_T : 43,7 - 49,8 \ \mu m$$

$$R_A : 5,1 - 6,7 \ \mu m$$

– perméabilité : 10 cm³/cm².s.bar
– diamètre poreux moyen : 7,4 μm

**Revendications**

**1 -** Procédé de fabrication d'un tube poreux en matériau composite carbone-carbone, qui comporte l'enroulement d'une nappe carbonée de manière à former un substrat fibreux ayant la forme d'un tube et la densification de ce substrat par formation d'une matrice carbonée poreuse, caractérisé en ce que :

a) on enroule sur un mandrin (1) rigide, à surface lisse et de faible rugosité, une nappe non-tissée de précurseur de fibres de carbone (2) de densité apparente comprise entre 0,005 et 0,05, et on introduit la nappe (2), enroulée sur son mandrin (1), dans une gaîne (3) souple, solide mécaniquement de manière à maintenir serré ledit enroulement,

b) on comprime la nappe enroulée à l'aide de moyens de compression permettant d'avoir une réduction homothétique de l'épaisseur de l'enroulement par rapport à l'axe central du tube, de manière à obtenir un substrat fibreux, uniformément comprimé sur le mandrin (1), de densité apparente comprise entre 0,2 et 0,6, et on soumet la nappe enroulée, pendant ou après sa compression, à un traitement thermique pour figer sa structure sous forme de profilé de substrat fibreux (5), que l'on peut ensuite éventuellement carboniser,

c) après avoir, si nécessaire, retiré la gaîne (3), on imprègne le profilé fibreux (5) d'une résine et on polymérise ladite résine de manière à obtenir un profilé rigide (6) à matrice de résine polymérisée.

d) on porte ledit profilé rigide (6) à une température comprise entre 700 et 1300°C pour le carboniser, le mandrin (1) ayant été rétiré soit avant la carbonisation si nécessaire soit de préférence après,

de manière à obtenir un tube à perméabilité élevée, à faible diamètre de pore et à surface intérieure de faible rugosité, de densité apparente comprise entre 0,5 et 1,2.

**2 -** Procédé selon la revendication 1 dans lequel ladite nappe non-tissée de précurseur de fibres de carbone (2) est une nappe de mat de précurseur de fibres de carbone à l'état préoxydé qui peut être ou non aiguilleté.

**3 -** Procédé selon la revendication 2 dans lequel ledit mat de précurseur est un enchevêtrement de segments de précurseur de fibres de carbone, orientés aléatoirement, de longueur moyenne comprise entre 1 et 100 mm.

**4 -** Procédé selon une quelconque des revendications 1 à 3 dans lequel tout ou partie de ladite nappe (2) contient une fine charge minérale réfractaire de taille particulaire comprise entre 0,1 et 10 μm de manière à modifier le diamètre de pore du tube final et à obtenir un tube poreux asymétrique.

**5 -** Procédé selon la revendication 4 dans lequel seule une partie de ladite nappe (2) correspondant aux enroulements intérieurs dudit tube contiennent une fine charge minérale, de manière à réduire le diamètre de pore sur une faible épaisseur et sur la face intérieure dudit tube.

**6 -** Procédé selon une quelconque des revendications 1 à 5 dans lequel on enroule sur un mandrin (1) plusieurs nappes (2) de mat aux caractéristiques différentes de manière à obtenir un tube poreux asymétrique présentant des couches successives à diamètre de pores variant typiquement d'un facteur 10 d'une couche à la couche suivante.

**7 -** Procédé selon une quelconque des revendications 1 à 5 dans lequel on enroule sur un mandrin (1) plusieurs nappes (2) sous forme de bandelettes non-tissées de faible largeur en mat aux caractéristiques différentes et de faible largeur (typiquement 1/10 de la longueur du mandrin), de manière à obtenir un tube poreux asymétrique présentant des couches successives à diamètre de pores variant typiquement d'un facteur 10 d'une couche à la couche suivante et formées de spires jointives (10) ou à chevauchement (11).

**8 -** Procédé selon la revendication 7 dans lequel on enroule sur un mandrin plusieurs bandelettes, une sur deux étant en alternance enroulée selon un angle +α, l'autre étant enroulée selon un angle -α, de manière à obtenir des caractéristiques mécaniques améliorées.

**9 -** Procédé selon une quelconque des revendications 1 à 8 dans lequel ledit mandrin (1) est un profilé de longueur pouvant dépasser 1000 mm de section constante quelconque ne comportant pas de partie concave de manière que le mandrin, en tous points de sa surface, soit en contact avec la nappe et la supporte.

**10 -** Procédé selon la revendication 9 dans lequel ledit mandrin est choisie parmi les tiges ou tubes à section circulaire de diamètre compris entre 1 et 50 mm, en graphite, en métal ou alliage métallique, en téflon, en métal ou alliage métallique recouvert de téflon.

**11 -** Procédé selon la revendication 10 dans lequel ledit mandrin est une tige ou un tube en cuivre.

**12 -** Procédé selon une quelconque des revendications 1 à 11 dans lequel ladite gaîne est une tresse tissée en carbone, à section variable selon la force de traction exercée sur elle de manière à ne pas former de plis lors de la compression de la nappe roulée.

**13 -** Procédé selon une quelconque des revendications 1 à 11 dans lequel ladite gaîne est une tresse en fibres naturelles ou synthétiques.

**14 -** Procédé selon la revendication 12 ou 13 dans laquelle ladite gaîne présente un maillage large, à claire-voie, de manière à maintenir serré l'enroulement de la nappe tout en recouvrant moins de 30% de la surface de l'enroulement et à permettre ainsi d'imprégner l'enroulement comprimé avec une résine sans avoir à enlever la gaîne et d'obtenir un tube poreux éventuellement renforcé par une gaîne externe.

**15 -** Procédé selon une quelconque des revendications 1 à 14 dans lequel on comprime en continu et à froid la nappe non-tissée (2) enroulée et on l'introduit dans un tube métallique (9) dans lequel on la soumet audit traitement thermique, à une température comprise entre 100 et 400°C, afin de figer sa structure.

**16 -** Procédé selon la revendication 15 dans lequel ledit tube métallique (9) est mécaniquement solidaire desdits moyens de compression (4), est muni de moyens de chauffage permettant de traiter thermiquement la nappe enroulée comprimée de manière à délivrer en continu un profilé de substrat fibreux à texture figée (5).

**17 -** Procédé selon la revendication 15 dans lequel ledit tube métallique (9) contenant la nappe enroulée comprimée est placé dans une étuve en vue du traitement thermique, puis le tube métallique (9) est retiré pour être réutilisé.

**18 -** Procédé selon une quelconque des revendications 1 à 14 dans lequel on comprime en continu et à chaud, à une température comprise entre 200 et 500 °C, la nappe non-tissée enroulée de manière à obtenir directement un profilé de substrat fibreux à texture figée (5).

**19 -** Procédé selon une quelconque des revendications 15 à 17 dans lequel lesdits moyens de compression (4) sont constitués par une filière en PTFE.

**20 -** Procédé selon une quelconque des revendications 1 à 19 dans lequel ladite résine est une résine donnant un taux de carbone supérieur à 30 % après carbonisation, choisie de préférence parmi les résines phénoliques, les résines furaniques, les mélanges brai-furfural catalysés au sulfate d'éthyle.

**21 -** Procédé selon une quelconque des revendications 1 à 16, 18 à 20 dans lequel on imprègne de résine en continu le profilé de substrat fibreux à texture figée (5) et on polymérise la résine au moins partiellement en continu, pour obtenir des profilés facilement manipulables.

**22 -** Procédé selon une quelconque des revendications 1 à 21 dans lequel le mandrin (1) est une tige ou un tube en métal ou alliage métallique, dans lequel on carbonise le profilé rigide (6) à une température comprise entre 700 et 1300°C muni de son mandrin (1) de manière à diminuer la rugosité de la surface intérieure du tube grâce à la dilatation relative du mandrin (1) due à la différence de coefficient de dilatation entre le mandrin (1) et le profilé rigide (6) ou le tube poreux final.

**23 -** Tube poreux en matériau composite carbone-carbone obtenu selon le procédé de l'une quelconque des revendications 1 à 22 utilisable comme élément de filtration ou comme support de membrane filtrante.

**24 -** Tube poreux selon la revendication 23 comportant au moins deux couches de diamètre de pores croîssant de la couche intérieure vers la couche extérieure, de manière à avoir un tube poreux asymétrique de grande perméabilité.

FIG. 1

FIG. 2

FIG. 2-1

FIG. 2-2

FIG. 3-1a

FIG. 3-1b

FIG. 3-2a

FIG. 3-2b

FIG.4a

FIG.4b

FIG.5a

FIG. 5b

FIG. 5c

FIG.6

1 - Enroulement & gaînage

2 - Compression

3 - Imprégnation & polymérisation

4 - Carbonisation

5 - Produit final

FIG.7

Office européen
des brevets

# RAPPORT DE RECHERCHE EUROPEENNE

Numero de la demande

EP    92 42 0018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 582 956 (LE CARBONE LORRAINE)<br>* le document en entier *<br>--- | 1,20,23 | C04B38/00<br>C04B35/52<br>B01D71/02 |
| A | EP-A-0 237 031 (CONRADTY NÜRNBERG)<br><br>* le document en entier *<br>--- | 1,7-11,<br>20 | B01D69/10<br>B01D39/20 |
| A | DE-A-2 722 575 (MORGANITE MODMOR LTD)<br><br>* page 8, ligne 27 - page 9, ligne 19 *<br>* page 17, ligne 18 - ligne 28 *<br>* revendications *<br>--- | 1,2,18,<br>20 | |
| A | FR-A-2 488 244 (TOHO BESLON CO LTD)<br><br>* page 4, ligne 12 - ligne 24; revendications *<br>--- | 1,9,10,<br>20 | |
| A | PATENT ABSTRACTS OF JAPAN<br>vol. 13, no. 575 (C-667)(3923) 19 Décembre 1989<br>& JP-A-1 239 061 ( NKK CORP ) 25 Septembre 1989<br>* le document en entier *<br>--- | 1 | |
| A | PATENT ABSTRACTS OF JAPAN<br>vol. 9, no. 159 (E-326)(1882) 4 Juillet 1985<br>& JP-A-60 037 664 ( FUJI DENKI ) 27 Février 1985<br>* le document en entier *<br>--- | 1,6 | **DOMAINES TECHNIQUES RECHERCHES (Int. Cl.5)**<br><br>C04B<br>B01D |
| E | EP-A-0 467 806 (LE CARBONE LORRAINE) 22 Janvier 1992<br>* le document en entier *<br><br><br>----- | 1-5,18,<br>20,21,23 | |

Le présent rapport a été établi pour toutes les revendications

| Lieu de la recherche | Date d'achèvement de la recherche | Examinateur |
|---|---|---|
| LA HAYE | 27 MARS 1992 | HOORNAERT P.G.R.J. |

EPO FORM 1503 03.82 (P0402)